(19) Europäisches Patentamt
European Patent Office
Office européen des brevets

(11) **EP 2 541 792 A1**

(12) **EUROPEAN PATENT APPLICATION**

(43) Date of publication:
**02.01.2013 Bulletin 2013/01**

(51) Int Cl.:
***H04B 5/00*** (2006.01)

(21) Application number: **12160573.7**

(22) Date of filing: **21.03.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.06.2011 JP 2011143433**

(71) Applicant: **Kabushiki Kaisha Toshiba
Tokyo 105-8001 (JP)**

(72) Inventors:
• **Oodachi, Noriaki
Tokyo, 105-8001 (JP)**
• **Ogawa, Kenichirou
Tokyo, 105-8001 (JP)**

• **Kudo, Hiroki
Tokyo, 105-8001 (JP)**
• **Yamada, Akiko
Tokyo, 105-8001 (JP)**
• **Shijo, Tetsu
Tokyo, 105-8001 (JP)**
• **Shoki, Hiroki
Tokyo, 105-8001 (JP)**
• **Obayashi, Shuichi
Tokyo, 105-8001 (JP)**

(74) Representative: **HOFFMANN EITLE
Patent- und Rechtsanwälte
Arabellastrasse 4
81925 München (DE)**

(54) **Wireless power transmission system, power transmission apparatus and power reception apparatus**

(57) According to one embodiment, a wireless power transmission system, includes a power transmission antenna (120) and a power reception antenna (130). The power transmission antenna (120) has a first resonance frequency and a first frequency bandwidth, and wirelessly transmits high-frequency energy having a first transmission frequency. The power reception antenna (130) has a second resonance frequency and a second frequency bandwidth, and wirelessly receives the high-frequency energy. The second resonance frequency is higher than a highest frequency within the first frequency bandwidth. The first transmission frequency falls within the first frequency bandwidth.

FIG. 1

**Description**

FIELD

Embodiments described herein relate generally to wireless power transmission.

BACKGROUND

There has been conventionally provided a resonant wireless power transmission system. In this wireless power transmission system, the resonance frequencies of a power transmission antenna and power reception antenna are close to each other, which means that expression (1) below holds:.

$$|f2 - f1| \leq \min\left(\frac{\Delta f1}{2}, \frac{\Delta f2}{2}\right) \qquad (1)$$

where f1 represents the resonance frequency of the power transmission antenna, $\Delta$f1 represents the frequency bandwidth of the power transmission antenna, f2 represents the resonance frequency of the power reception antenna, and $\Delta$f2 represents the frequency bandwidth of the power reception antenna. Furthermore, min(a, b) is a function which returns a smaller one of "a" and "b".

To obtain high wireless transmission efficiency in the conventional resonant wireless power transmission system, the power transmission antenna and the power reception antenna are coupled to resonate. That is, a transmission frequency (= f3) is limited to a value falling within a range where the frequency bandwidths (=$\Delta$f1, $\Delta$f2) of the power transmission antenna and power reception antenna overlap each other.

In the conventional resonant wireless power transmission system, therefore, the size of the power reception antenna is restricted by that of the power transmission antenna. For example, the power reception antenna is generally designed to have almost the same size as that of the power transmission antenna so that the resonance frequency of the power reception antenna is close to that of the power transmission antenna. That is, in the conventional resonant wireless power transmission system, both the power transmission antenna and the power reception antenna tend to be designed to have a large size, and it is therefore difficult to downsize the antennas.

As an application of the wireless power transmission system, wireless charging (or wireless power supply) for a mobile apparatus (for example, a laptop PC, a cellular phone, and the like), an electric vehicle, an electric motorbike, and an electric bicycle has been considered. If, for example, a power reception antenna is downsized, it becomes easy to incorporate the power reception antenna in those mobile terminals.

In addition, it has been desired to solve problems associated with adjustment of a resonance frequency and improvement of a power transmission antenna or power reception antenna (for example, thickness reduction, weight reduction, loss reduction, cost reduction, power increase, efficiency improvement, and the like) in the conventional resonant wireless power transmission system.

BRIEF DESCRIPTION OF THE DRAWINGS

FIG. 1 is a block diagram showing a wireless power transmission system according to the first embodiment;
FIG. 2 is a view showing the relationship between a transmission frequency and the resonance frequencies and frequency bandwidths of a power transmission antenna and power reception antenna in the wireless power transmission system according to the first embodiment;
FIG. 3 is a block diagram showing a wireless power transmission system according to the second embodiment;
FIG. 4 is a block diagram showing a wireless power transmission system according to the third embodiment;
FIG. 5 is a block diagram showing a wireless power transmission system according to the fourth embodiment;
FIG. 6 is a block diagram showing a wireless power transmission system according to the fifth embodiment;
FIG. 7 is a block diagram showing a wireless power transmission system according to the sixth embodiment;
FIG. 8 is a block diagram showing a wireless power transmission system according to the sixth embodiment;
FIG. 9 is a block diagram showing a wireless power transmission system according to the seventh embodiment;
FIG. 10 is a view showing a circular planar spiral inductor; and
FIG. 11 is a view showing a rectangular planar spiral inductor.

DETAILED DESCRIPTION

Embodiments will be described below with reference to the accompanying drawings.

In general, according to one embodiment, a wireless power transmission system, comprises a power transmission antenna and a power reception antenna. The power transmission antenna has a first resonance frequency and a first frequency bandwidth, receives high-frequency energy having a first transmission frequency from a power transmission circuit, and wirelessly transmits the high-frequency energy. The power reception antenna has a second resonance frequency and a second frequency bandwidth, and wirelessly receives the high-frequency energy. The second resonance frequency is higher than a highest frequency within the first frequency bandwidth. The first transmission frequency falls within the first frequency bandwidth.

Note that the same or similar reference numerals denote the same or similar elements hereinafter, and a repetitive description thereof will be basically omitted.

(First Embodiment)

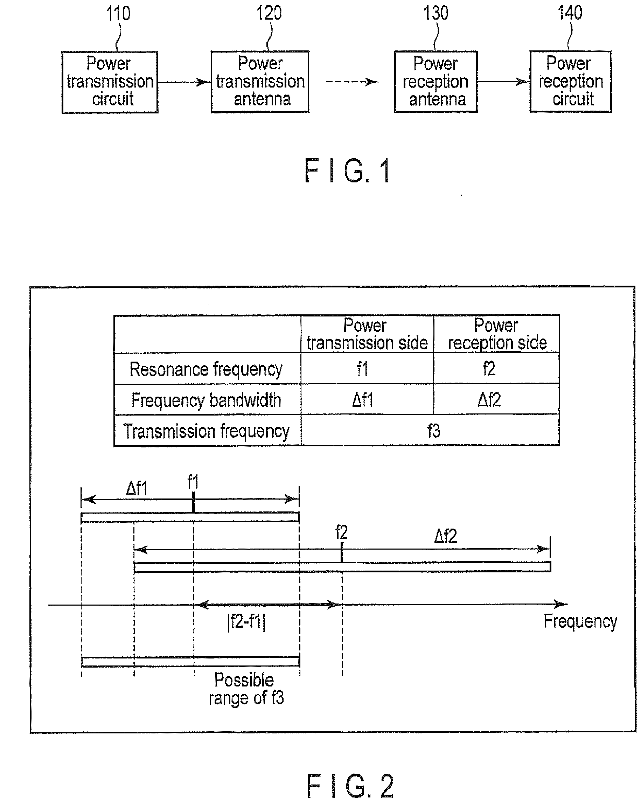

As shown in FIG. 1, a wireless power transmission system according to the first embodiment includes a power transmission apparatus and a power reception apparatus. The power transmission apparatus includes a power transmission circuit 110 and a power transmission antenna 120. The power reception apparatus includes a power reception antenna 130 and a power reception circuit 140.

The power transmission circuit 110 generates (or relays from an external component) high-frequency energy, and supplies it to the power transmission antenna 120. The high-frequency energy is, for example, a narrow band signal having a transmission frequency (= f3) as its center.

For example, the power transmission circuit 110 can include a sinusoidal wave generation circuit and a sinusoidal wave amplification circuit. The sinusoidal wave generation circuit generates a sinusoidal wave having a principal component at the transmission frequency (= f3). The sinusoidal wave amplification circuit amplifies the sinusoidal wave generated by the sinusoidal wave generation circuit to obtain the high-frequency energy.

The power transmission antenna 120 wirelessly transmits, to the power reception apparatus (the power reception antenna 130 thereof), the high-frequency energy supplied from the power transmission circuit 110. Let f1 be the value of the resonance frequency of the power transmission antenna 120 and $\Delta f1$ be the value of the frequency bandwidth of the power transmission antenna 120.

The resonance frequency (= f1) indicates a frequency at which the real part of the impedance of the power transmission antenna 120 is nonzero and the imaginary part of the impedance is zero. Note that although the power transmission antenna 120 generally has a plurality of resonance frequencies, the resonance frequency (= f1) is assumed to indicate the lowest one of the plurality of resonance frequencies in the following description. The frequency bandwidth $\Delta f1$ of the power transmission antenna 120 is defined by:

$$\Delta f1 = \frac{f1}{Q} \qquad (2)$$

Note that Q is defined by:

$$Q = \frac{2\pi f1 L}{R} \qquad (3)$$

where L represents the inductance of the power transmission antenna 120 and R represents the sum of the loss resistances of the power transmission antenna 120. The loss resistances include, for example, a conductor resistance and a radiation resistance.

The power reception antenna 130 wirelessly receives high-frequency energy supplied from the power transmission apparatus (the power transmission antenna 120 thereof). The power reception antenna 130 supplies the wirelessly received high-frequency energy to the power reception circuit 140. Let f2 be the value of the resonance frequency of the power reception antenna 130 and $\Delta f2$ be the value of the frequency bandwidth of the power reception antenna 130. Note that by substituting the resonance frequency (= f2) and frequency bandwidth (= $\Delta f2$) of the power reception antenna 130 for the resonance frequency (= f1) and frequency bandwidth (= $\Delta f1$) of the power transmission antenna 120 in the above description, it is possible to understand details of the resonance frequency and frequency bandwidth of the power reception antenna 130.

The power reception circuit 140 provides, to an external component, the high-frequency energy supplied from the power reception antenna 130. The high-frequency energy may be used to charge the battery of an external apparatus (not shown), or may be used as power for driving an external apparatus (not shown). For example, the power reception circuit 140 may provide, to an external component, the high-frequency energy after AC-DC conversion.

The wireless power transmission system according to this embodiment enables to downsize the power reception antenna 130 by designing the resonance frequency (= f2) of the power reception antenna 130 and the transmission frequency (= f3) of the high-frequency energy to satisfy the following conditions.

As the first condition, the resonance frequency (= f2) of the power reception antenna 130 is higher than the highest frequency within the frequency bandwidth (= $\Delta$f1) of the power transmission antenna 120. That is, the first condition means that expression (1) above does not hold. As the second condition, the transmission frequency (= f3) can take a value falling within the same range as the frequency bandwidth (= $\Delta$f1) of the power transmission antenna 120. FIG. 2 shows the relationship between the transmission frequency (= f3) and the resonance frequencies (= f1, f2) and frequency bandwidths (= $\Delta$f1, $\Delta$f2) of the power transmission antenna 120 and power reception antenna 130 when the first condition and the second condition are satisfied.

In one antenna structure, in general, as an antenna has a higher resonance frequency, it is easier to reduce the size of the antenna. More specifically, the resonance frequency of an antenna indicates a resonance frequency when an inductor and capacitor, which have an inductance and capacitance corresponding to the antenna, respectively, are serially or parallelly connected. Let L be the inductance, C be the capacitance, and fr be the resonance frequency. Then, the following expression (4) is obtained.

$$fr = \frac{1}{2\pi\sqrt{LC}} \qquad (4)$$

As is apparent from expression (4) above, as the product of the inductance (= L) and the capacitance (= C) is smaller, the resonance frequency (= fr) is higher. Furthermore, the inductance (= L) and the capacitance (= C) generally increase or decrease depending on the size of the antenna. In one antenna structure, therefore, as the inductance (= L) and the capacitance (= C) are smaller (that is, the resonance frequency (= fr) is higher), it is easier to downsize the antenna.

According to expression (1) above, the upper limit of f2 is obtained by calculating f1 + $\Delta$f1/2. Since, however, the first condition is satisfied in this embodiment, the value of f2 is larger than the upper limit. That is, it becomes easy to downsize the power reception antenna 130.

Furthermore, since the second condition is satisfied in this embodiment, a possible range of the transmission frequency (= f3) coincides with the frequency bandwidth $\Delta$f1 of the power transmission antenna 120. High-efficiency wireless power transmission is therefore possible.

As described above, the wireless power transmission system according to the first embodiment is designed such that the resonance frequency of the power reception antenna is higher than the highest frequency within the frequency bandwidth of the power transmission antenna, and a power transmission frequency can take a value falling within the same range as the frequency bandwidth of the power transmission antenna. According to this wireless power transmission system, therefore, it is easy to downsize the power reception antenna and it is possible to wirelessly transmit power at high efficiency.

(Second Embodiment)

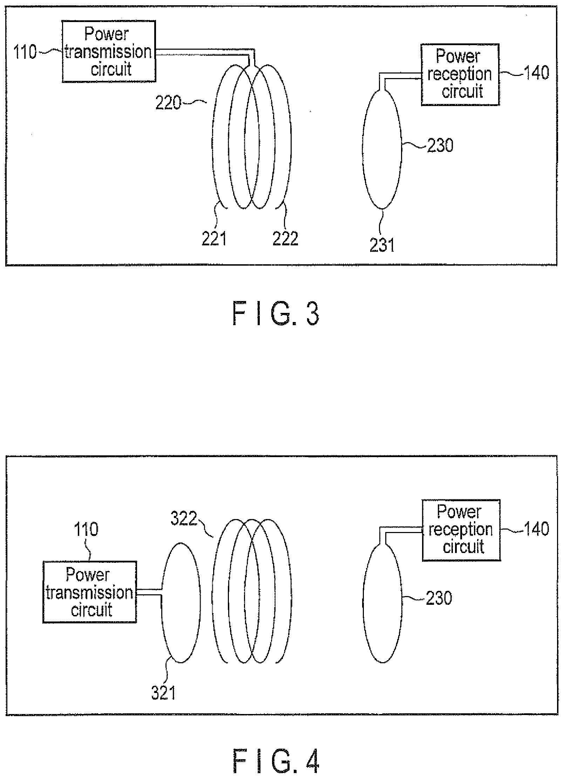

As shown in FIG. 3, a wireless power transmission system according to the second embodiment includes a power transmission apparatus and a power reception apparatus. The power transmission apparatus includes a power transmission circuit 110 and an open-end self-resonant inductor 220. The power reception apparatus includes a loop element 230 and a power reception circuit 140. That is, in the present embodiment, the power transmission antenna 120 of the first embodiment is implemented using the open-end self-resonant inductor 220, and the power reception antenna 130 of the first embodiment is implemented using the short-circuited end loop element 230.

The open-end self-resonant inductor 220 and the short-circuited end loop element 230 are mutually coupled (that is, magnetically coupled). The open-end self-resonant inductor 220 wirelessly transmits, to the power reception apparatus (the short-circuited end loop element 230 thereof), high-frequency energy supplied from the power transmission circuit 110. Let f1 be the value of the resonance frequency of the open-end self-resonant inductor 220 and $\Delta$f1 be the value of the frequency bandwidth of the open-end self-resonant inductor 220.

The open-end self-resonant inductor 220 is a kind of inductor, and therefore, has a high inductance. The open-end self-resonant inductor 220 can be magnetically coupled since it generates a magnetic field nearby. Since ends 221 and 222 of the open-end self-resonant inductor 220 are open, a large floating capacitance is generated between the ends 221 and 222. Note that in part of the open-end self-resonant inductor 220 other the portion between the ends 221 and 222, a floating capacitance is also generated. The inductance (= L) and (floating) capacitance (= C) cause the open-end self-resonant inductor 220 to resonate.

In general, the inductance (= L) and capacitance (= C) of the open-end self-resonant inductor 220 are both higher than those of a self-resonant inductor having a different arrangement and having almost the same size. Even if, therefore, the open-end self-resonant inductor 220 is designed to have a size smaller than that of a self-resonant inductor having a different arrangement, it is possible to obtain a parameter (= LC) which achieves a desired resonance frequency (f1). That is, when the power transmission antenna 120 is implemented using the open-end self-resonant inductor 220, it becomes easy to downsize the power transmission antenna 120.

The short-circuited end loop element 230 is magnetically coupled with the open-end self-resonant inductor 220. The short-circuited end loop element 230 wirelessly receives high-frequency energy supplied from the power transmission apparatus (the open-end self-resonant inductor 220 thereof). The short-circuited end loop element 230 supplies the wirelessly received high-frequency energy to the power reception circuit 140. Let f2 be the value of the resonance frequency of the short-circuited end loop element 230 and Δf2 be the value of the frequency bandwidth of the short-circuited end loop element 230.

The short-circuited end loop element 230 can be magnetically coupled since it generates a magnetic field nearby. Since an end 231 of the short-circuited end loop element 230 is short-circuited, an electric current passes through the end 231. The short-circuited end loop element 230, therefore, has a high inductance (= L) as compared with a case in which the end 231 is open. Since the end 231 of the short-circuited end loop element 230 is short-circuited, the element 230 has a small capacitance (= C) as compared with a case in which the end 231 is open. Even if a desired resonance frequency (= f2) is set to be high (that is, a parameter (= LC) which achieves the desired resonance frequency is set to be small), the short-circuited end loop element 230 can have a high inductance (= L). That is, since the short-circuited end loop element 230 has a high inductance (= L) while having a high resonance frequency (= f2), it is easy to downsize the short-circuited end loop element 230 and high-efficiency magnetic coupling is possible.

As described above, in the wireless power transmission system according to the second embodiment, the power transmission antenna and power reception antenna of the first embodiment are implemented using the open-end self-resonant inductor and short-circuited end loop element, respectively. According to this wireless power transmission system, therefore, it is possible to wirelessly transmit power through magnetic coupling between the power transmission antenna and the power reception antenna at a high efficiency while downsizing those antennas.

(Third Embodiment)

As shown in FIG. 4, a wireless power transmission system according to the third embodiment includes a power transmission apparatus and a power reception apparatus. The power transmission apparatus includes a power transmission circuit 110, a short-circuited end loop element 321, and an open-end self-resonant inductor 322. That is, in this embodiment, the power transmission antenna 120 of the first embodiment is implemented using the short-circuited end loop element 321 and open-end self-resonant inductor 322. The power reception apparatus may be the same as, similar to, or different from that shown in FIG. 3. For example, the power reception apparatus may be the same as or similar to that shown FIG. 1.

The open-end self-resonant inductor 322 is magnetically coupled with the short-circuited end loop element 321. The open-end self-resonant inductor 322 receives high-frequency energy from the short-circuited end loop element 321, and wirelessly transmits it to the power reception apparatus. According to the example of FIG. 4, the open-end self-resonant inductor 322 is also magnetically coupled with a short-circuited end loop element 230. The open-end self-resonant inductor 322, therefore, can wirelessly transmit high-frequency energy to the short-circuited end loop element 230 at a high efficiency.

The short-circuited end loop element 321 is magnetically coupled with the open-end self-resonant inductor 322. The short-circuited end loop element 321 receives high-frequency energy from the power transmission circuit 110, and wirelessly transmits it to the open-end self-resonant inductor 322. Note that the short-circuited end loop element 321 has properties which are the same as or similar to those of the above-described short-circuited end loop element 230. It is, therefore, easy to downsize the short-circuited end loop element 321 while making high-efficiency wireless power transmission possible.

The short-circuited end loop element 321 also serves to perform impedance matching. As the distance between the short-circuited end loop element 321 and the open-end self-resonant inductor 322 changes, the coupling coefficient between them also changes. That is, the impedance of the open-end self-resonant inductor 322 is converted. By appropriately designing the above distance, therefore, it is possible to convert the impedance of the open-end self-resonant inductor 322 into a desired value. For example, the impedance of the open-end self-resonant inductor 322 is converted to be matched with the impedance of the power transmission circuit 110. Matching the impedances in this way suppresses power reflection, thereby allowing high-efficiency wireless power transmission.

As described above, the wireless power transmission system according to the third embodiment performs impedance matching in the power transmission antenna. According to this wireless power transmission system, therefore, power reflection in the power transmission apparatus is suppressed, thereby enabling high-efficiency wireless power transmission.

(Fourth Embodiment)

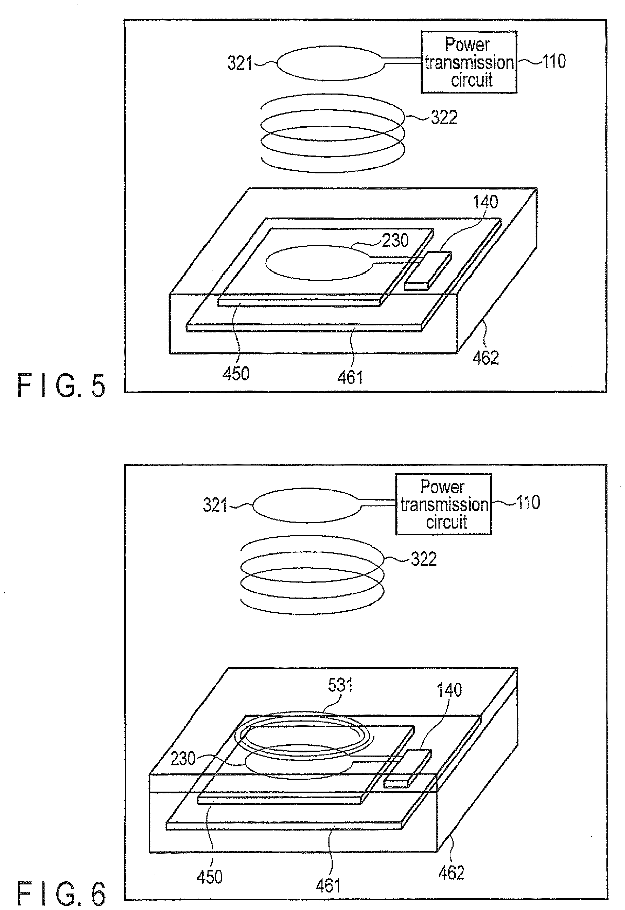

As shown in FIG. 5, a wireless power transmission system according to the fourth embodiment includes a power transmission apparatus and a power reception apparatus. The power transmission apparatus may be the same as, similar to, or different from that shown in FIG. 4. For example, the power transmission apparatus may be the same as or similar to that shown in FIG. 1 or 3. The power reception apparatus includes a short-circuited end loop element 230, a power reception circuit 140, a magnetic sheet 450, a circuit substrate 461, and a housing 462. Note that the short-circuited end loop element 230 may be substituted by a power reception antenna 130.

The short-circuited end loop element 230 is incorporated in the housing 462. The short-circuited end loop element 230 wirelessly receives high-frequency energy from the power transmission apparatus. According to the example of FIG. 5, the short-circuited end loop element 230 is magnetically coupled with an open-end self-resonant inductor 322, and wirelessly receives high-frequency energy from the open-end self-resonant inductor 322 at a high efficiency. The short-circuited end loop element 230 supplies the wirelessly received high-frequency energy to a power reception circuit 140.

The circuit substrate 461 is incorporated in the housing 462, and is arranged to be spaced apart from the short-circuited end loop element 230. In addition to the circuit substrate 461, the housing 462 incorporates the power reception circuit 140, short-circuited end loop element 230, and magnetic sheet 450. Note that details of the circuit substrate 461 and housing 462 depend on the type of the power reception apparatus or an electronic apparatus incorporating the power reception apparatus. The circuit substrate 461 and housing 462 are typically provided for a mobile apparatus.

The magnetic sheet 450 is inserted (arranged) between the circuit substrate 461 and the short-circuited end loop element 230. The circuit substrate 461 is arranged so that, for example, its circuit surface is parallel to the loop surface of the short-circuited end loop element 230. When the short-circuited end loop element 230 receives high-frequency energy, an electric current flows through the short-circuited end loop element 230 while generating a magnetic field. If the magnetic sheet 450 is not provided, the magnetic field reaches the circuit substrate 461 to generate an eddy current. On the other hand, if the magnetic sheet 450 is provided, the magnetic field concentrates within the magnetic sheet 450, and the strength of the magnetic field reaching the circuit substrate 461 decreases. That is, providing the magnetic sheet 450 suppresses an energy loss due to an eddy current, thereby enabling high-efficiency wireless power transmission.

Assume that the magnetic sheet 450 is formed by, for example, a material having a relative magnetic permeability of 1 or larger. In addition to the relative magnetic permeability of 1 or larger, the material forming the magnetic sheet 450 may have a relative permittivity of 1 or larger. Furthermore, the shape of the magnetic sheet 450 is arbitrary. For example, the magnetic sheet 450 may be formed in a rectangular sheet shape or in a shape similar to that of the short-circuited end loop element 230.

As described above, in the wireless power transmission system according to the fourth embodiment, the housing incorporates the power reception antenna and the circuit substrate, and the magnetic sheet is arranged in a space between the power reception antenna and the circuit substrate. According to this wireless power transmission system, therefore, high-efficiency wireless power transmission is possible while incorporating the power reception antenna in the housing.

(Fifth Embodiment)

As shown in FIG. 6, a wireless power transmission system according to the fifth embodiment includes a power transmission apparatus and a power reception apparatus. The power transmission apparatus may be the same as, similar to, or different from that shown in FIG. 4. For example, the power transmission apparatus may be the same as or similar to that shown in FIG. 1 or 3. The power reception apparatus includes a short-circuited end loop element 230, a power reception circuit 140, a magnetic sheet 450, a circuit substrate 461, and a housing 462. The power reception apparatus also includes a self-resonant inductor 531 detachable from the housing 462. Note that the short-circuited end loop element 230 may be substituted by a power reception antenna 130.

When the self-resonant inductor 531 is attached to the housing 462, it is magnetically coupled with the short-circuited end loop element 230. The self-resonant inductor 531 wirelessly receives high-frequency energy from the power transmission apparatus, and wirelessly transmits it to the short-circuited end loop element 230 at a high efficiency. That is, the self-resonant inductor 531 can be considered as part of the power reception antenna.

Let f4 be the value of the resonance frequency of the self-resonant inductor 531 and Δf4 be the value of the frequency bandwidth of the self-resonant inductor 531. The value of f4 satisfies expression (5) below with respect to f1 and Δf1 described above. That is, the value of f4 falls within the frequency bandwidth (= Δf1).

$$f1 - \frac{\Delta f1}{2} \le f4 \le f1 + \frac{\Delta f1}{2} \qquad (5)$$

The fact that expression (5) above holds means that the resonance frequencies (= f4, f1) are close to each other. The magnetic coupling amount between the power transmission antenna and the self-resonant inductor 531 is large. Even if, therefore, the distance between the power transmission antenna and the self-resonant inductor 531 is long, high-efficiency wireless power transmission is possible. In other words, it is possible to extend a wireless power transmission distance.

As described above, the wireless power transmission system according to the fifth embodiment prepares a self-resonant inductor detachable from the housing. The self-resonant inductor has a resonance frequency close to that of the power transmission antenna. The self-resonant inductor functions as part of the power reception antenna when it is attached to the housing. According to this wireless power transmission system, therefore, it is possible to extend a wireless power transmission distance.

(Sixth Embodiment)

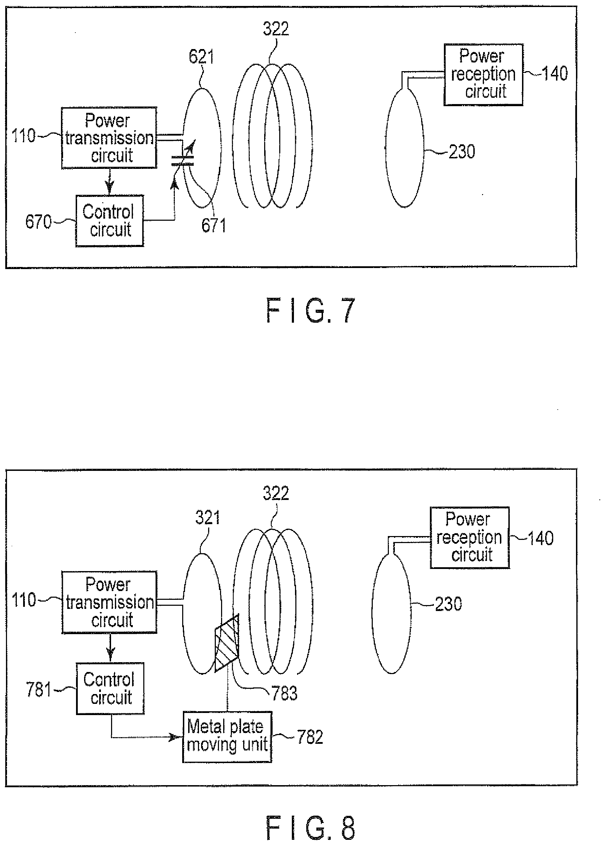

As shown in FIG. 7, a wireless power transmission system according to the sixth embodiment includes a power transmission apparatus and a power reception apparatus. The power transmission apparatus includes a power transmission circuit 110, a short-circuited end loop element 621, an open-end self-resonant inductor 322, a control circuit 670, and a variable capacitor 671. Note that the open-end self-resonant inductor 322 may be omitted and the short-circuited end loop element 621 may be substituted by another antenna element. The power reception apparatus may be the same as, similar to, or different from that shown in FIG. 3. For example, the power reception apparatus may be the same as or similar to that shown in FIG. 1, 4, or 5.

As represented by expression (4) above, a resonance frequency is generally based on the inductance (= L) and capacitance (= C) of an antenna. The inductance and capacitance, however, depend on not only the structure of the antenna but also conditions around the antenna. If, for example, a metal exists around the antenna, the resonance frequency and frequency bandwidth of the antenna change. Depending on the actual use environment of the power transmission apparatus, objects (for example, the wall, chest, floor, instrument, and the like of a room) which have various shapes and are made of various kinds of materials may exist at various positions. Due to their influences, the resonance frequency (= f1) and frequency bandwidth (= Δf1) of the antenna of the power transmission apparatus may change. The resonance frequency (= f1) and frequency bandwidth (= Δf1) are parameters associated with the wireless power transmission efficiency as described above, and are, therefore, desirably constant regardless of the use environment of the power transmission apparatus.

According to the example of FIG. 7, the variable capacitor 671 is connected with the short-circuited end loop element 621. Since, therefore, the capacitance (= C) of the short-circuited end loop element 621 is variable, it is possible to adjust the resonance frequency (= f1) and frequency bandwidth (= Δf1). That is, if the capacitance of the variable capacitor 671 is appropriately controlled, a variation in the resonance frequency (= f1) and frequency bandwidth (= Δf1) due to a change in the use environment of the power transmission apparatus is suppressed, and the wireless power transmission efficiency can be stably kept high. Note that instead of or in addition to the short-circuited end loop element 621, the variable capacitor 671 may be connected with the open-end self-resonant inductor 322. The variable capacitor 671 may be substituted by a variable inductor or a combination of a variable capacitor and a variable inductor. That is, the variable capacitor 671 need only be a variable passive element including at least one of a variable capacitor and a variable inductor.

The control circuit 670 controls the capacitance of the variable capacitor 671. More specifically, the control circuit 670 monitors, via the power transmission circuit 110, power reflected by the short-circuited end loop element 621. The control circuit 670 increases/decreases the capacitance of the variable capacitor so that the reflected power becomes small.

As described above, in the wireless power transmission system according to the sixth embodiment, a variable passive element including at least one of a variable capacitor and a variable inductor is connected with the power transmission antenna and the variable passive element is controlled so that reflected power becomes small. According to this wireless power transmission system, therefore, it is possible to suppress a variation in the resonance frequency and frequency bandwidth of the power transmission antenna, and to stably keep the wireless power transmission efficiency high.

According to the example of FIG. 7, although the power transmission apparatus includes the self-resonant inductor, the power reception apparatus includes no self-resonant inductor. Therefore, it is not necessary to adjust the resonance frequency and frequency bandwidth of the power reception antenna. This fact contributes to downsizing and cost reduction of the power reception antenna. In particular, downsizing and cost reduction of the power reception antenna are preferable when a mobile object (for example, a mobile apparatus) incorporates the power reception antenna.

It is also possible to use a metal plate to adjust the resonance frequency and frequency bandwidth of the power transmission antenna. As shown in FIG. 8, a control circuit 781, a metal plate moving unit 782, and a metal plate 783 may be added to the wireless power transmission system of FIG. 3.

Under control of the control circuit 781, the metal plate moving unit 782 moves the position of the metal plate 783. The metal plate 783 is fixed at an arbitrary position around the power transmission antenna (that is, a short-circuited end loop element 321 and the open-end self-resonant inductor 322) by the action of the metal plate moving unit 782. The resonance frequency and frequency bandwidth of the power transmission antenna are adjusted according to the position of the metal plate 783.

The control circuit 781 controls the position of the metal plate 783. More specifically, the control circuit 781 monitors, via the power transmission circuit 110, power reflected by the short-circuited end loop element 321. The control circuit 781 causes the metal plate moving unit 782 to move the position of the metal plate 783 so that the reflected power becomes small.

Also in the wireless power transmission system of FIG. 8, it is possible to obtain effects which are the same as or similar to those obtained in the wireless power transmission system of FIG. 7.


(Seventh Embodiment)

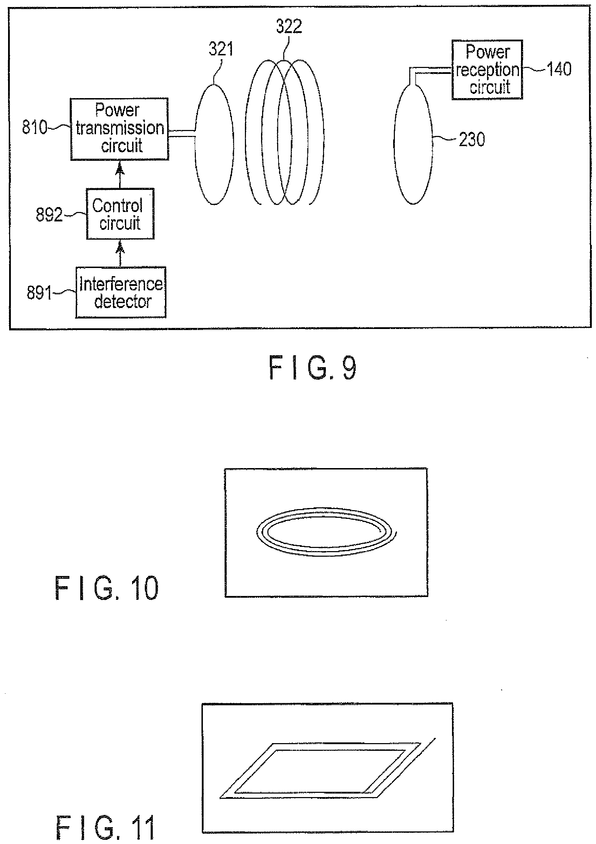

As shown in FIG. 9, a wireless power transmission system according to the seventh embodiment includes a power transmission apparatus and a power reception apparatus. The power transmission apparatus includes a power transmission circuit 810, a short-circuited end loop element 321, an open-end self-resonant inductor 322, an interference detector 891, and a control circuit 892. Note that the open-end self-resonant inductor 322 may be omitted and the short-circuited end loop element 321 may be substituted by another antenna element. The power reception apparatus may be the same as, similar to, or different from that shown in FIG. 3. For example, the power reception apparatus may be the same as or similar to that shown in FIG. 1, 4, or 5.

The power transmission circuit 810 can select a transmission frequency (= f3) from at least two values. The control circuit 892 controls the value of the transmission frequency selected by the power transmission circuit 810. Note that at least two values mentioned above fall within the range of the frequency bandwidth (= $\Delta$f1) of a power transmission antenna.

The interference detector 891 detects a frequency use status within the frequency bandwidth (= $\Delta$f1) of the power transmission antenna. Note that the frequency use status is information (for example, a reception power strength at each frequency) indicating whether a different system is using each frequency within the frequency bandwidth (= $\Delta$f1) of the power transmission antenna.

The control circuit 892 refers to the frequency use status detected by the interference detector 891, and determines whether using the current transmission frequency (= f3) interferes with a different system. If, for example, a different system is using the current transmission frequency (= f3), it may receive part of high-frequency energy wirelessly transmitted using the current transmission frequency (= f3). The part of the high-frequency energy may cause interference, thereby deteriorating the performance of the different system. In this case, therefore, the control circuit 892 can determine that using the current transmission frequency (= f3) interferes with the different system.

If the control circuit 892 determines that using the current transmission frequency (= f3) interferes with the different system, it controls the power transmission circuit 810 to change the transmission frequency (= f3) to a different value. Alternatively, the control circuit 892 may control the value of the transmission frequency so that interference becomes small.

As described above, the wireless power transmission system according to the seventh embodiment controls the value of a transmission frequency so as to avoid or reduce interference. Note that the transmission frequency is variable only within the frequency bandwidth of the power transmission antenna. According to this wireless power transmission system, therefore, it is possible to avoid or reduce interference while keeping the wireless power transmission efficiency high.

A supplementary explanation of each embodiment will be given below.

The open-end self-resonant inductor 220 or 322 may be modified to be a planar inductor. For example, the inductor 220 or 322 may be modified to be a circular open-end spiral inductor shown in FIG. 10 or a rectangular open-end spiral inductor shown in FIG. 11. If a planar inductor is used, it is possible to reduce the thickness of an antenna.

When the planar inductor is incorporated in the housing, the shape of the planar inductor may be changed to conform to that of the housing. Furthermore, the shape of the planar coil is not limited to a circular or rectangular shape, and may be an arbitrary shape such as an ellipse or polygon.

The shape of the short-circuited end loop element 230, 321, or 621 is not limited to a circle, and may be an arbitrary shape such as a rectangle, ellipse, polygon, or multi-winding loop.

In each embodiment, a technique of downsizing the power reception antenna has been mainly described. By substituting the power transmission antenna for the power reception antenna in the above description, it is possible to downsize the power transmission antenna.

Although each embodiment has been described assuming that it is applied to a wireless power transmission system, it may be applied to a wireless communication system. For example, it is possible to apply each embodiment to a wireless communication system by substituting a high-frequency modulated signal for high-frequency energy and using other well-known hardware.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A wireless power transmission system, **characterized by** comprising:

   a power transmission antenna (120) configured to have a first resonance frequency and a first frequency bandwidth, receive high-frequency energy having a first transmission frequency from a power transmission circuit (110), and wirelessly transmit the high-frequency energy; and
   a power reception antenna (130) configured to have a second resonance frequency and a second frequency bandwidth, and wirelessly receive the high-frequency energy,
   wherein the second resonance frequency is higher than a highest frequency within the first frequency bandwidth, and
   the first transmission frequency falls within the first frequency bandwidth.

2. The system according to claim 1, **characterized in that**
   the power transmission antenna (120) includes an open-end self-resonant inductor (220), and
   the power reception antenna (130) includes a short-circuited end loop element (230).

3. The system according to claim 1 or 2, **characterized in that**
   the power transmission antenna (120) comprises:

   a short-circuited end loop element (321) configured to receive the high-frequency energy from the power transmission circuit (110); and
   an open-end self-resonant inductor (322) configured to receive the high-frequency energy by magnetically coupling with the short-circuited end loop element (321), and wirelessly transmit the high-frequency energy.

4. The system according to one of claims 1 to 3, **characterized by** further comprising:

   a circuit substrate (461) configured to be arranged to be spaced apart from the power reception antenna (130); and
   a magnetic sheet (450) configured to be arranged in a space between the power reception antenna (130) and the circuit substrate (461).

5. The system according to one of claims 1 to 4, **characterized by** further comprising:

   a housing (462) configured to incorporate the power reception antenna (130); and
   a self-resonant inductor (531) configured to have a third resonance frequency and a third frequency bandwidth, be detachable from the housing (462), and magnetically couple with, when attached to the housing (462), the power reception antenna (130),

wherein the third resonance frequency falls within the first frequency bandwidth, and
when the self-resonant inductor (531) is attached to the housing (462), the self-resonant inductor (531) wirelessly receives the high-frequency energy, and supplies the high-frequency energy to the power reception antenna (130).

6. The system according to one of claims 1 to 5, **characterized by** further comprising:

a variable passive element configured to include at least one of a variable capacitor (671) and a variable inductor, and be connected with the power transmission antenna (120); and
a control circuit (670) configured to control the variable passive element so that power reflected by the transmission antenna (120) becomes small.

7. The system according to one of claims 1 to 6, **characterized by** further comprising:

a detector (891) configured to detect a frequency use status within the first frequency bandwidth; and
a control circuit (892) configured to determine based on the frequency use status whether using the first transmission frequency interferes with a different system, and control, when it is determined that using the first transmission frequency interferes with the different system, the power transmission circuit to change the first transmission frequency to a different value within the first frequency bandwidth.

8. A power reception apparatus, **characterized by** comprising:

a power reception antenna (130) configured to have a second resonance frequency and a second frequency bandwidth, and wirelessly receive high-frequency energy having a first transmission frequency from a power transmission antenna (120) having a first resonance frequency and a first frequency bandwidth,
wherein the second resonance frequency is higher than a highest frequency within the first frequency bandwidth, and
the first transmission frequency falls within the first frequency bandwidth.

9. A power transmission apparatus, **characterized by** comprising:

a power transmission antenna (120) configured to have a first resonance frequency and a first frequency bandwidth, receive high-frequency energy having a first transmission frequency from a power transmission circuit (110), and wirelessly transmit the high-frequency energy to a power reception antenna (130) having a second resonance frequency and a second frequency bandwidth,
wherein the second resonance frequency is higher than a highest frequency within the first frequency bandwidth, and
the first transmission frequency falls within the first frequency bandwidth.

10. A wireless power transmission system, **characterized by** comprising:

a power transmission antenna (120) configured to have a first resonance frequency and a first frequency bandwidth, receive high-frequency energy having a first transmission frequency from a power transmission circuit (110), and wirelessly transmit the high-frequency energy; and
a power reception antenna (130) configured to have a second resonance frequency and a second frequency bandwidth, and wirelessly receive the high-frequency energy,
wherein the first resonance frequency is higher than a highest frequency within the second frequency bandwidth, and
the first transmission frequency falls within the second frequency bandwidth.

11. A power transmission apparatus, **characterized by** comprising:

a power transmission antenna (120) configured to have a first resonance frequency and a first frequency bandwidth, receive high-frequency energy having a first transmission frequency from a power transmission circuit (110), and wirelessly transmit the high-frequency energy to a power reception antenna (130) having a second resonance frequency and a second frequency bandwidth,
wherein the first resonance frequency is higher than a highest frequency within the second frequency bandwidth, and

the first transmission frequency falls within the second frequency bandwidth.

12. A power reception apparatus, **characterized by** comprising:

a power reception antenna (130) configured to have a second resonance frequency and a second frequency bandwidth, and wirelessly receive high-frequency energy having a first transmission frequency from a power transmission antenna (120) having a first resonance frequency and a first frequency bandwidth,
wherein the first resonance frequency is higher than a highest frequency within the second frequency bandwidth, and
the first transmission frequency falls within the second frequency bandwidth.

FIG. 1

| | Power transmission side | Power reception side |
|---|---|---|
| Resonance frequency | f1 | f2 |
| Frequency bandwidth | Δf1 | Δf2 |
| Transmission frequency | f3 | |

FIG. 2

EP 2 541 792 A1

FIG. 3

FIG. 4

321

Power
transmission
circuit 110

322

140

230

450  461  462

FIG. 5

321

Power
transmission
circuit 110

322

531  140

230

450  461  462

FIG. 6

322

621

Power
reception
circuit ~140

110 ~ Power
transmission
circuit

~230

670 ~ Control
circuit

671

**F I G. 7**

322

321

Power
reception
circuit ~140

110 ~ Power
transmission
circuit

~230

781 ~ Control
circuit

783

Metal plate
moving unit ~782

**F I G. 8**

FIG. 9

FIG. 10

FIG. 11

Europäisches
Patentamt

European
Patent Office

Office européen
des brevets

**EUROPEAN SEARCH REPORT**

Application Number

EP 12 16 0573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/164296 A1 (KURS ANDRE B [US] ET AL) 1 July 2010 (2010-07-01)<br>* paragraph [0018] *<br>* paragraph [0039]; figure 6 *<br>* paragraph [0109] *<br>* paragraph [0135] - paragraph [0137] *<br>* paragraph [0151] - paragraph [0152] *<br>* paragraph [0171] - paragraph [0172] *<br>* paragraph [0203] *<br>* paragraph [0251] - paragraph [0259] *<br>* paragraph [0307] - paragraph [0315] *<br>* paragraph [0326] - paragraph [0332]; figure 28 *<br>* paragraph [0386]; figure 38 *<br>* paragraph [0400] *<br>----- | 1-12 | INV.<br>H04B5/00 |
| X<br>A | US 2010/244580 A1 (UCHIDA AKIYOSHI [JP] ET AL) 30 September 2010 (2010-09-30)<br>* paragraph [0024] *<br>* paragraph [0039]; figure 1 *<br>* paragraph [0043] *<br>* paragraph [0047] *<br>* paragraph [0070] - paragraph [0072] *<br>* paragraph [0090]; figure 2 *<br>----- | 1-3,6,<br>8-12<br>4,5,7 | |
| X<br>A | US 2008/278264 A1 (KARALIS ARISTEIDIS [US] ET AL) 13 November 2008 (2008-11-13)<br>* paragraph [0007] - paragraph [0009] *<br>* paragraph [0027] *<br>* paragraph [0109]; figure 2 *<br>* paragraph [0187]; figure 14 *<br>----- | 1-3,8-12<br>4-7 | |

TECHNICAL FIELDS
SEARCHED      (IPC)

H04B

The present search report has been drawn up for all claims

| Place of search | Date of completion of the search | Examiner |
|---|---|---|
| The Hague | 2 July 2012 | Riposati, Benedetto |

EPO FORM 1503 03.82 (P04C01)

**ANNEX TO THE EUROPEAN SEARCH REPORT
ON EUROPEAN PATENT APPLICATION NO.**                    EP 12 16 0573

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2012

| Patent document cited in search report | | Publication date | Patent family member(s) | | Publication date |
|---|---|---|---|---|---|
| US 2010164296 | A1 | 01-07-2010 | NONE | | |
| US 2010244580 | A1 | 30-09-2010 | JP | 2010239769 A | 21-10-2010 |
| | | | US | 2010244580 A1 | 30-09-2010 |
| US 2008278264 | A1 | 13-11-2008 | US | 2008278264 A1 | 13-11-2008 |
| | | | US | 2009224856 A1 | 10-09-2009 |
| | | | US | 2010117456 A1 | 13-05-2010 |
| | | | US | 2010171370 A1 | 08-07-2010 |
| | | | US | 2010181844 A1 | 22-07-2010 |
| | | | US | 2010201205 A1 | 12-08-2010 |
| | | | US | 2010225175 A1 | 09-09-2010 |
| | | | US | 2010231053 A1 | 16-09-2010 |
| | | | US | 2010237706 A1 | 23-09-2010 |
| | | | US | 2010237707 A1 | 23-09-2010 |
| | | | US | 2010237708 A1 | 23-09-2010 |
| | | | US | 2010253152 A1 | 07-10-2010 |
| | | | US | 2010264745 A1 | 21-10-2010 |
| | | | US | 2010277005 A1 | 04-11-2010 |
| | | | US | 2010327660 A1 | 30-12-2010 |
| | | | US | 2010327661 A1 | 30-12-2010 |
| | | | US | 2011012431 A1 | 20-01-2011 |
| | | | US | 2011018361 A1 | 27-01-2011 |
| | | | US | 2011025131 A1 | 03-02-2011 |
| | | | US | 2011049996 A1 | 03-03-2011 |
| | | | US | 2011049998 A1 | 03-03-2011 |
| | | | US | 2011074218 A1 | 31-03-2011 |
| | | | US | 2011074347 A1 | 31-03-2011 |
| | | | US | 2011089895 A1 | 21-04-2011 |
| | | | US | 2011140544 A1 | 16-06-2011 |
| | | | US | 2011148219 A1 | 23-06-2011 |
| | | | US | 2011162895 A1 | 07-07-2011 |
| | | | US | 2011169339 A1 | 14-07-2011 |
| | | | US | 2011181122 A1 | 28-07-2011 |
| | | | US | 2011193419 A1 | 11-08-2011 |
| | | | US | 2011198939 A1 | 18-08-2011 |
| | | | US | 2011221278 A1 | 15-09-2011 |
| | | | US | 2011227528 A1 | 22-09-2011 |
| | | | US | 2011227530 A1 | 22-09-2011 |
| | | | US | 2011241618 A1 | 06-10-2011 |

EPO FORM P0459

For more details about this annex : see Official Journal of the European Patent Office, No. 12/82